# EUROPÄISCHE PATENTSCHRIFT

(11) **EP 1 203 794 B1**
(45) Veröffentlichungstag und Bekanntmachung des Hinweises auf die Patenterteilung: **29.12.2004**
(21) Anmeldenummer: 01125517.1
(22) Anmeldetag: 25.10.2001
(51) Int. Cl.: C09C 1/00

(54) **Stabilisierung von Perlglanzpigmenten**
Stabilisation of pearlescent pigments
Stabilisation de pigments nacrés

(30) Priorität: 06.11.2000 DE 10054980
(43) Veröffentlichungstag der Anmeldung: 08.05.2002
(73) Patentinhaber: MERCK PATENT GmbH, 64293 Darmstadt (DE)
(72) Erfinder: Glausch, Ralf, 64367 Mühltal (DE); Jekel, Marita, 64287 Darmstadt (DE)
(74) Vertreter: Leifert, Elmar, Dr.

(56) Entgegenhaltungen:
- EP-A- 0 104 516
- EP-A- 0 632 109

## Beschreibung

Die Erfindung betrifft nachbeschichtete Perlglanzpigmente, sowie ein Verfahren zu deren Herstellung. Des Weiteren betrifft die Erfindung die Verwendung dieser Pigmente.

Aus der EP 0 632 109 B1 sind Perlglanzpigmente bekannt, die zur Verwendung in Überzugsmitteln einer Nachbehandlung unterzogen werden, um ihre Stabilität zu verbessern.

Die aus der EP 0632 109 bekannten Perlglanzpigmente besitzen folgende allgemeine Schichtreihenfolge: die erste "Schicht", wird durch das Substrat, z.B. Glimmer gebildet, die zweite Schicht ist eine Metalloxidschicht, z.B. Titandioxid oder Eisen(III)oxid, wobei diese beiden Schichten das Basispigment bilden. Auf das geglühte Basispigment wird beginnend mit einer dritten Schicht die sogenannte Nachbeschichtung aufgebracht. Die dritte Schicht enthält hierbei Oxide, Hydroxide und/oder Oxidhydrate des Siliciums oder Aluminiums, die vierte Schicht enthält Oxide, Hydroxide und/oder Oxidhydrate des Siliciums, Aluminiums, Zirkoniums und/oder Cers, wobei diese Schicht sich von der dritten unterscheidet und die fünfte Schicht, enthält organofunktionelle Kupplungsagenzien, z.B. Silane oder Zirkonaluminate.

Vor allem die in der zweiten Schicht mit Eisen(III)oxid beschichteten Perlglanzpigmente auf Glimmerbasis sind trotz der oben beschriebenen stabilisierenden Nachbeschichtung der Schichten drei bis fünf nicht in allen Bereichen einsatzfähig, da bei extremen Beanspruchungen eine noch höhere Stabilität der Pigmente notwendig wäre.

Ähnliches gilt insbesondere auch für die in der zweiten Schicht mit Titandioxid oder anderen Metalloxiden, wie Chromoxid, Zirkondioxid, Zinndioxid oder Zinkoxid beschichteten Perlglanzpigmente auf Glimmerbasis, die zwar häufig stabiler sind als die mit Eisen(III)oxid beschichteten Glimmer, aber ebenfalls nicht einschränkungslos einsetzbar sind.

Die aus dem Stand der Technik bekannten nachbeschichteten Perlglanzpigmente besitzen ferner den Nachteil, dass ihre Orientierung in Überzugsmittelfilmen nicht optimal ist, das heißt, dass eine Verbesserung der parallelen Ausrichtung der Pigmente zur Filmschicht wünschenswert wäre, um die Glanzeigenschaften zu verbessern.

Eine der Aufgaben der Erfindung bestand darin die Stabilität derartiger Pigmente zu erhöhen und Pigmente zur Verfügung zu stellen, die eine verbesserte Orientierung innerhalb von Überzugsmittelfilmen besitzen.

Diese Aufgabe wurde erfindungsgemäß gelöst, indem Pigmente zur Verfügung gestellt werden, die folgende Schichtreihenfolge aufweisen,
eine erste Schicht, bestehend aus einem plättchenförmigen Substrat,
eine zweite Schicht,
   enthaltend ein oder mehrere Metalloxide,
   wobei die erste und zweite Schicht ein geglühtes Basispigment bilden,
eine dritte Schicht, enthaltend das korrespondierende
   ungeglühte Oxid, Hydroxid oder Oxidhydrat des Oxids der zweiten Schicht,
eine vierte Schicht, enthaltend Oxide, Hydroxide und/oder
   Oxidhydrate des Siliciums oder Aluminiums,
eine fünfte Schicht, enthaltend Oxide, Hydroxide und/oder
   Oxidhydrate des Siliciums, Aluminiums, Zirkoniums und/oder
   Cers, wobei diese Schicht sich von der vierten Schicht unterscheidet und
eine sechste Schicht, enthaltend ein oder mehrere organofunktionelle Kupplungsagenzien.

Die dritte Schicht übernimmt hierbei die Funktion eines Haftungsverstärkers und umfasst vorzugsweise 0,1 bis 10 Gew.-%, noch bevorzugter 1 bis 5 Gew.-% bezogen auf das Basispigment.

Als plättchenförmiges Substrat des Basispigments kommen die in der EP 632 109 B1 genannten Substrate, wie beispielsweise Glimmer, Kaolin oder Glas in Frage. Besonders bevorzugt ist jedoch Glimmer als Basissubstrat.

Als Metalloxide der zweiten Schicht sind beispielweise Eisen(III)oxid und/oder Titandioxid oder andere Metalloxide, wie Chromoxid, Zirkondioxid, Zinndioxid oder Zinkoxid geeignet, wobei die Oxide auch in Mischungen vorliegen können. Besonders starke Verbesserungen gegenüber den aus der EP 632 109 B1 bekannten Perlglanzpigmenten werden bei den mit Eisen(III)oxid beschichteten Substraten erreicht.

Als Kupplungsagenzien sind die in der EP 632 109 B1 offenbarten Kupplungsagenzien geeignet. Hierzu zählen insbesondere Silane, Zirkonaluminate, Zirkonate oder Titanate, wobei die Silane vorzugsweise die Struktur Y-(CH₂)ₙ-SiX₃ besitzen, worin Y eine organofunktionelle Gruppe, z.B. eine Amino-, Methacryl-, Vinyl- und/oder Epoxygruppe ist und X für eine siliciumfunktionelle Gruppe steht, die nach ihrer Hydrolyse mit aktiven Stellen eines anorganischen Substrats oder durch Kondensation mit anderen Siliciumverbindungen reagiert. Es kann sich hierbei beispielsweise um eine Alkoxygruppe handeln.

Neben diesen im wesentlichen hydrophilen Kupplungsagenzien sind auch hydrophobe Silane einsetzbar und zwar besonders die Aryl-, Alkyl- und Fluoralkylsubstituierten Di- und Trimethoxysilane. Hierzu gehören zum Beispiel Phenethyltrimethoxysilan, Propyltrimethoxysilan, Butyltrimethoxysilan, Isobutyltrimethoxysilan, Hexyltrimethoxysilan, Octyltrimethoxysilan,1H,1H,2H,2H-Perfluordecyltrimethoxysilan und (3,3,3-Trifluoropropyl)methyldimethoxysilan.

Eine weitere Aufgabe bestand in der Bereitstellung eines Verfahrens zur Gewinnung der erfindungsgemäßen Perlglanzpigmente.

Diese Aufgabe wurde durch die Bereitstellung eines mehrstufigen Verfahrens gelöst, in welchem man das geglühte, mit einem oder mehreren Metalloxiden beschichtete plättchenförmige Substrat in Wasser suspendiert, auf 25 bis 100 °C, vorzugsweise 40 bis 80 °C erhitzt und einen pH-Wert von 3 bis 11, vorzugsweise 5 bis 9 einstellt, in einer ersten Stufe ein oder mehrere wasserlösliche Metallsalze zufügt, die mit den geglühten Metalloxiden der Metalloxidbeschichtung des plättchenförmigen Substrats korrespondieren, diese ganz oder teilweise als Oxid, Hydroxid und/oder Oxidhydrat abscheidet, dann auf 30 bis 100 °C, vorzugsweise 40 bis 75 °C erhitzt und einen pH-Wert von 3 bis 9, vorzugsweise 6 bis 7 einstellt, in einer zweiten Stufe ein wasserlösliches Silicat und/oder Aluminiumsalz zufügt, dieses ganz oder teilweise als Oxid, Hydroxid und/oder Oxidhydrat abscheidet, in einer dritten Stufe durch Zugabe mindestens eines wasserlöslichen Silicats, Aluminium-, Cer- und/oder Zirkonsalzes bei einem pH-Wert im Bereich von 3 bis 9, vorzugsweise 6 bis 7, die entsprechenden Oxide, Hydroxide oder Oxidhydrate davon abscheidet, wobei sich diese von denen der zweiten Stufe unterscheiden müssen und in einer vierten Stufe mindestens ein organisches Kupplungsagens zusetzt und dieses bei einem pH-Wert von 3 bis 9, vorzugsweise 6 bis 8, abscheidet.

Als geglühte, mit Metalloxiden überzogene plättchenförmige Substrate können die oben bereits erwähnten Substrate, mit den oben genannten Metalloxidbeschichtungen eingesetzt werden, die im Handel unter der Bezeichnung Iriodin® (Hersteller E. Merck, Darmstadt) erhältlich sind.

Als wasserlösliches Silicat kommt vorzugsweise Natronwasserglas in Frage, als wasserlösliche Aluminium-, Cer- und Zirkonsalze kommen generell alle wasserlöslichen Salze dieser Metalle in Frage, es bieten sich jedoch beispielsweise die einfach erhältlichen Halogenide bzw. Halogenid-Hydrate an.

Als Kupplungsreagenzien werden bevorzugt die oben genannten eingesetzt.

Das erfindungsgemäße Nachbeschichtungsverfahren kann wie oben beschrieben in einem Arbeitsgang durchgeführt werden ohne das Pigment nach der ersten Fällungsreaktion (erste Stufe) zu isolieren und aufzuarbeiten. Es kann aber auch eine Isolierung des Pigments nach der ersten Stufe, das heißt dem Aufbringen der haftungsverbessernden Schicht, erfolgen.

Die erfindungsgemäß beschichteten Perlglanzpigmente finden vor allem bei der Pigmentierung von Farben, wie z.B. Druckfarben und Kunststoffen, wie z.B.

Kunststofffolien, sowie Überzugsmitteln, wie z.B. Lacken Verwendung. Sie finden jedoch auch in anderen Bereichen, in denen die oben genannten verbesserten Eigenschaften eine Rolle spielen, wie z.B. der Pigmentierung von Kosmetika, Verwendung.

Im Folgenden soll die Erfindung anhand von Beispielen verdeutlicht werden.

### Beispiele

Verschiedene Perlglanzpigmente wurden mittels des erfindungsgemäßen Nachbehandlungsverfahrens nachbeschichtet.

### a) Eisenoxidpigment ohne Zwischenisolation (präpariert in einem Reaktor)

100 g Iriodin® 504 Rot werden in 900 ml vollentsalztem Wasser suspendiert und unter kräftigem Rühren auf 40 °C aufgeheizt.

Mit 2,5%iger NaOH wird ein pH-Wert von 9,0 eingestellt (alle angegebenen pH-Werte werden mit Hilfe von geeignetem pH-Indikatorpapier bestimmt).
Innerhalb von ca. 30 min wird der Suspension eine Lösung von 18,66 g FeCl₃ in 74,64 g vollentsalztem Wasser (entspricht einer 3 %-igen FeCl₃-Lösung) zugetropft. Dabei sinkt der pH-Wert innerhalb von 5 min auf 3,2 und wird bei diesem pH-Wert mit 10%iger Natronlauge konstant gehalten. Nach Erreichen des Endpunktes wird die Pigmentsuspension auf einen pH-Wert von 5,0 eingestellt und ca. 15 min nachgerührt.
Anschließend läßt man innerhalb von 30 min eine Lösung von 2,7 ml Natronwasserglas (370 g SiO₂ pro Liter) in 150 ml vollentsalztem Wasser zur Pigmentsuspension tropfen. Der pH-Wert wird dabei mit 2,5 %-iger Salzsäure konstant gehalten. Nach beendeter Zugabe wird 15 min bei 40 °C nachgerührt. Danach wird der pH-Wert innerhalb von 10 min mit 2,5 %-iger Salzsäure auf 6,5 eingestellt und 15 min bei 40 °C nachgerührt. Nun werden 1,35g Natriumsulfat, 2,30 g Aluminiumchlorid-Hexahydrat und 1,10g Cer-(II)-chlorid-Heptahydrat als Feststoffe in die Suspension zugegeben, wobei der pH-Wert auf 4,0 abfällt.

Anschließend wird innerhalb von 20 min auf 75 °C aufgeheizt und weitere 75 min bei 75 °C gerührt, wobei der pH-Wert auf 3,3 abfällt.
Anschließend werden 3,0g Dynasilan AMMO (3-Aminopropyltrimethoxysilan der Fa, Hüls) pur, innerhalb von 10 min zugegeben und der pH-Wert wird mit der oben genannten Salzsäure konstant gehalten. Nach beendeter Zugabe wird 2 h bei 75 °C nachgerührt, wobei das Silan vollständig hydrolysiert und mit der Pigment-Oberfläche reagiert.
Anschließend wird mit 2,5 %-iger Natronlauge sehr langsam innerhalb von 60 min auf pH 8,0 eingestellt. Dabei werden die Oxide bzw. Oxidhydrate und das Silan vollständig als Mischfällung abgeschieden.
Anschließend wird noch 1h zur Nachreaktion bei 75 °C weitergerührt, wobei der pH-Wert auf 7,0 fällt.
Das Produkt wird über eine Filternutsche abgesaugt, mit vollentsalztem Wasser salzfrei gewaschen und ca. 16 h bei 140 °C getrocknet.

### b) Eisenoxid mit Zwischenisolation

100 g Iriodin® 504 Rot werden in 900 ml vollentsalztem Wasser suspendiert und unter kräftigem Rühren auf 40 °C aufgeheizt.

Mit 2,5 %-iger Natronlauge wird ein pH-Wert von 9,0 eingestellt (alle angegebenen pH-Werte werden mit Hilfe von geeignetem pH-Indikatorpapier bestimmt).
Innerhalb von ca. 30 min wird der Suspension eine Lösung von 18,66 g FeCl₃ in 74,64 g vollentsalztem Wasser (entspricht einer 3 %-igen FeCl₃-Lösung) zugetropft. Dabei sinkt der pH-Wert innerhalb von 5 min auf 3,2 und wird bei diesem pH-Wert mit 10 %-iger Natronlauge konstant gehalten. Nach Erreichen des Endpunktes wird die Pigmentsuspension auf einen pH-Wert von 5,0 eingestellt und ca. 15 min nachgerührt.
Das Pigment wird isoliert (abgesaugt) mit ca. 12 l vollentsalztem Wasser gewaschen und ca. 16 Std. bei 110°C getrocknet.
Das so erhaltene modifizierte Pigment wird in 900 ml vollentsalztem Wasser suspendiert, unter kräftigem Rühren auf 40 °C aufgeheizt und mit 2,5 %-iger Natronlauge wird ein pH-Wert von 9,0 eingestellt.

Anschließend läßt man innerhalb von 30 min eine Lösung von 2,7 ml Natronwasserglas (370 g SiO₂ pro Liter) in 150 ml vollentsalztem Wasser zur Pigmentsuspension tropfen. Der pH-Wert wird dabei mit 2,5 %-iger Salzsäure konstant gehalten. Nach beendeter Zugabe wird 15 min bei 40 °C nachgerührt. Danach wird innerhalb von 10 min mit 2,5%iger HCI auf pH 6,5 eingestellt und 15 min bei 40 °C nachgerührt. Nun werden 1,35g Natriumsulfat, 2,30 g Aluminiumchlorid-Hexahydrat und 1,10g Cer-(II)-chlorid-Heptahydrat als Feststoffe der Suspension zugegeben, wobei der pH-Wert auf 4,0 abfällt.
Anschließend wird innerhalb von 20 min auf 75 °C aufgeheizt und weitere 75 min bei 75 °C gerührt, wobei der pH-Wert auf 3,3 abfällt.
Nun werden 3,0g Z6040 (3-Glycidoxypropyltrimethoxysilan der Fa. Dow Corning) pur, innerhalb von 10 min zugegeben und der pH-Wert wird mit der oben genannten Salzsäure konstant gehalten. Nach beendeter Zugabe wird 2 h bei 75 °C nachgerührt, wobei das Silan vollständig hydrolysiert und mit der Pigment-Oberfläche reagiert.
Anschließend wird der pH-Wert mit 2,5 %-iger Natronlauge sehr langsam innerhalb von 60 min auf 8,0 eingestellt. Dabei werden die Oxide bzw. Oxidhydrate und das Silan vollständig als Mischfällung abgeschieden.
Anschließend wird noch 1h zur Nachreaktion bei 75 °C weitergerührt, wobei der pH-Wert auf 7,0 fällt.
Das Produkt wird über eine Filternutsche abgesaugt, mit vollentsalztem Wasser salzfrei gewaschen und ca. 16 h bei 140 °C getrocknet.

### c) Titandioxidpigment ohne Zwischenisolation (präpariert in einem Reaktor)

100 g Iriodin® 225 Rutil Perlblau werden in 900 ml vollentsalztem Wasser suspendiert und unter kräftigem Rühren auf 40 °C aufgeheizt.

Mit 2,5 %-iger NaOH wird ein pH-Wert von 9,0 eingestellt (alle angegebenen pH-Werte werden mit Hilfe von geeignetem pH-Indikatorpapier bestimmt).
Innerhalb von ca. 30 min wird der Suspension eine Lösung von 20,54 g TiCl4₄ in 74,64 g vollentsalztem Wasser zugetropft. Dabei sinkt der pH-Wert innerhalb von 5 min auf 3,2 und wird bei diesem pH-Wert mit 10 %-iger Natronlauge konstant gehalten. Nach Erreichen des Endpunktes wird die Pigmentsuspension auf einen pH-Wert von 5,0 eingestellt und ca. 15 min nachgerührt.
Anschließend läßt man innerhalb von 30 min eine Lösung von 2,7 ml Natronwasserglas (370 g SiO₂ pro Liter) in 150 ml vollentsalztem Wasser zur Pigmentsuspension tropfen. Der pH-Wert wird dabei mit 2,5 %-iger HCI konstant gehalten. Nach beendeter Zugabe wird 15 min bei 40 °C nachgerührt. Danach wird innerhalb von 10 min der pH-Wert mit 2,5 %-iger Salzsäure auf 6,5 eingestellt und 15 min bei 40 °C nachgerührt. Nun werden 1,35 g Natriumsulfat, 2,30 g Aluminiumchlorid-Hexahydrat und 1,10g Cer-(II)-chlorid-Heptahydrat als Feststoffe der Suspension zugegeben, wobei der pH-Wert auf 4,0 abfällt.
Anschließend wird innerhalb von 20 min auf 75 °C erwärmt und weitere 75 min bei 75 °C gerührt, wobei der pH-Wert auf 3,3 abfällt.
Nun werden 3,0g Dynasilan MEMO (3-Methacryloxytrimethoxysilan der Fa. Degussa-Hüls AG) pur, innerhalb von 10 min zugegeben und der pH-Wert wird mit der oben genannten Salzsäure konstant gehalten. Nach beendeter Zugabe wird 2 h bei 75 °C nachgerührt, wobei das Silan vollständig hydrolysiert und mit der Pigment-Oberfläche reagiert.
Anschließend wird der pH-Wert mit 2,5 %-iger NaOH sehr langsam innerhalb von 60 min auf 8,0 eingestellt. Dabei werden die Oxide bzw. Oxidhydrate und das Silan vollständig als Mischfällung abgeschieden.
Anschließend wird noch 1h zur Nachreaktion bei 75 °C weiter gerührt, wobei der pH-Wert auf 7,0 fällt.
Das Produkt wird über eine Filternutsche abgesaugt, mit vollentsalztem Wasser salzfrei gewaschen und ca. 16 h bei 140 °C getrocknet.

### Ergebnisse der Bewitterungsversuche

Die Pigmentproben a) bis c) wurden in ein Wasserlacksystem auf Basis eines Acrylat/Methacrylat-Bindemittels eingearbeitet und die Prüfproben per Spritzapplikation hergestellt.

Die Proben a) bis c) wurden mittels einer Kondenswasserprüfung nach DIN 50017 bewittert und eine Stunde nach Beanspruchungsende bewertet.

Die Bewertung der Blasenbildung erfolgte visuell nach DIN 53209. "m" ist hierbei ein Maß für die Anzahl der Blasen pro Flächeneinheit, während "g" ein Maß für die Größe der Blasen darstellt. Die Bewertungsskala reicht von 0 (sehr gut) bis 5 (sehr schlecht).

Die Quellung wurde ebenfalls visuell nach DIN 53230 beurteilt. Die relative Bewertungsskala reicht von 0 (nicht verändert) bis 5 (sehr stark verändert).
Die Adhäsion wurde visuell gemäß DIN 53151 bestimmt, wobei die relative Bewertungsskala von 0 (sehr gut) bis 5 (sehr schlecht) reicht.

Die Tabelle enthält die Prüfungsergebnisse der Proben a) bis c), sowie der Vergleichsproben mit Iriodin® 225 WR II und Iriodin® 504 WR II und einer pigmentfreien Nullprobe als Wasserklarlack. Die Pigmente Iriodin® 225 WR II (Titandioxidpigment) und Iriodin® 504 WR II (Eisenoxidpigment) gehören dem Stand der Technik an und besitzen nicht die erfindungsgemäße haftungsverstärkende Zwischenschicht.

**Tabelle:**

| Bewitterungsergebnisse der nachbehandelten Pigmente | | | |
|---|---|---|---|
| Beispiel-Nr. | Blasenbildung | Quellung | Adhäsion |
| a) | m 1 / g 1 | Q 1 | 1 |
| b) | m 1 / g 1 | Q 1 | 1 |
| c) | m 0 / g 0 | Q 0 | 0 |
| Iriodin® 225 WR II | m 2 / g 1 | Q 1-2 | 1-2 |
| Iriodin® 504 WR II | m 3 / g 4 | Q 3-4 | 4 |
| Nullprobe | m 0 / g 0 | Q 0 | 0 |

## Patentansprüche

1. Perlglanzpigmente, umfassend
eine erste, innere Schicht, bestehend aus einem plättchenförmigen Substrat,
eine zweite Schicht,
enthaltend eines oder mehrere Metalloxide,
wobei die erste und zweite Schicht ein geglühtes Basispigment bilden,
eine dritte Schicht, enthaltend das korrespondierende
ungeglühte Oxid, Hydroxid oder Oxidhydrat des Oxids der zweiten Schicht,
eine vierte Schicht, enthaltend Oxide, Hydroxide und/oder
Oxidhydrate des Siliciums oder Aluminiums,
eine fünfte Schicht, enthaltend Oxide, Hydroxide und/oder
Oxidhydrate des Siliciums, Aluminiums, Zirkoniums und/oder
Cers, wobei diese Schicht sich von der vierten Schicht unterscheidet und
eine sechste Schicht, enthaltend ein oder mehrere organofunktionelle Kupplungsreagenzien.

2. Perlglanzpigment nach Anspruch 1, **dadurch gekennzeichnet, dass** das Substrat Glimmer ist.

3. Perlglanzpigment nach einem der Ansprüche 1 oder 2, **dadurch gekennzeichnet, dass** das Metalloxid der zweiten Schicht Eisen(III)oxid oder Titandioxid ist.

4. Perlglanzpigment nach einem oder mehreren der Ansprüche 1 bis 3,
**dadurch gekennzeichnet, dass** das organische Kupplungsreagenz ein Silan, Zirkonaluminat, Zirkonat oder Titanat ist.

5. Verfahren zur Herstellung eines Perlglanzpigments nach einem der Ansprüche 1 bis 4, **dadurch gekennzeichnet, dass** ein geglühtes, mit einem oder mehreren Metalloxiden beschichtetes plättchenförmiges Substrat in Wasser suspendiert wird, auf 25 bis 100 °C, vorzugsweise 40 bis 80 °C erhitzt und einen pH-Wert von 3 bis 11, vorzugsweise 5 bis 9 einstellt, in einer ersten Stufe ein oder mehrere wasserlösliche Metallsalze zufügt, die mit den geglühten Metalloxiden der Metalloxidbeschichtung des plättchenförmigen Substrats korrespondieren, diese ganz oder teilweise als Oxid, Hydroxid und/oder Oxidhydrat abscheidet, dann auf 30 bis 100 °C, vorzugsweise 40 bis 75 °C erhitzt und einen pH-Wert von 3 bis 9, vorzugsweise 6 bis 7 einstellt, in einer zweiten Stufe ein wasserlösliches Silicat und/oder Aluminiumsalz zufügt, dieses ganz oder teilweise als Oxid, Hydroxid und/oder Oxidhydrat abscheidet, in einer dritten Stufe durch Zugabe mindestens eines wasserlöslichen Silikats, Aluminium-, Cerund/oder Zirkonsalzes bei einem pH-Wert im Bereich von 3 bis 9, vorzugsweise 6 bis 7, die entsprechenden Oxide, Hydroxide oder Oxidhydrate davon abscheidet, wobei sich diese von denen der zweiten Stufe unterscheiden und in einer vierten Stufe mindestens ein organisches Kupplungsagens zusetzt und dieses bei einem pH-Wert von 3 bis 9, vorzugsweise 6 bis 8, abscheidet.

6. Verfahren nach Anspruch 5,
**dadurch gekennzeichnet, dass** das Pigment nach der ersten Stufe vor der Durchführung der zweiten Stufe isoliert, gewaschen und getrocknet wird.

7. Verfahren nach einem der Ansprüche 5 oder 6,
**dadurch gekennzeichnet, dass** nach der dritten Stufe das Pigment durch Sedimentation, Waschen und Filtration abgetrennt und bei 80 bis 160 °C, vorzugsweise 120 bis 160 °C getrocknet wird.

8. Verfahren nach einem der Ansprüche 5 bis 7, **dadurch gekennzeichnet, dass** das geglühte, mit einem oder mehreren Metalloxiden beschichtete plättchenförmige Substrat ein mit Eisen(III)oxid und/oder Titandioxid beschichteter Glimmer ist.

9. Verfahren nach einem oder mehreren der Ansprüche 5 bis 7,
**dadurch gekennzeichnet, dass** das organische Kupplungsreagenz ein Silan, Zirkonaluminat, Zirkonat oder Titanat ist.

10. Verwendung des Perlglanzpigments nach einem oder mehreren der Ansprüche 1 bis 4 zur Pigmentierung von Lacken, Farben, Kunststoffen, Coatings und Kosmetika.

11. Lacke, Farben, Kunststoffen, Coatings und Kosmetika, die mit einem Perlglanzpigment nach einem oder mehreren der Ansprüche 1 bis 4 pigmentiert sind.

## Claims

1. Pearl lustre pigments comprising
a first, inner layer, consisting of a platelet-shaped substrate,
a second layer,
comprising one or more metal oxides,
the first and second layers forming a calcined base pigment,
a third layer, comprising the corresponding uncalcined oxide, hydroxide or oxide hydrate of the oxide of the second layer,
a fourth layer, comprising oxides, hydroxides and/or oxide hydrates of silicon or aluminium,
a fifth layer, comprising oxides, hydroxides and/or
oxide hydrates of silicon, aluminium, zirconium and/or cerium, this layer differing from the fourth layer, and
a sixth layer, comprising one or more organofunctional coupling reagents.

2. Pearl lustre pigment according to Claim 1, **characterized in that** the substrate is mica.

3. Pearl lustre pigment according to either of Claims 1 and 2, **characterized in that** the metal oxide of the second layer is iron(III) oxide or titanium dioxide.

4. Pearl lustre pigment according to one or more of Claims 1 to 3, **characterized in that** the organic coupling reagent is a silane, zirconium aluminate, zirconate or titanate.

5. Process for preparing a pearl lustre pigment according to one of Claims 1 to 4, **characterized in that** a calcined, platelet-shaped substrate coated with one or more metal oxides is suspended in water, heated at from 25 to 100°C, preferably from 40 to 80°C, and adjusted to a pH of from 3 to 11, preferably from 5 to 9, in a first stage one or more water-soluble metal salts are added which correspond to the calcined metal oxides of the metal oxide coating of the platelet-shaped substrate, these salts are deposited in whole or in part as oxide, hydroxide and/or oxide hydrate, followed by heating at from 30 to 100°C, preferably from 40 to 75°C, and adjustment to a pH of from 3 to 9, preferably from 6 to 7, in a second stage a water-soluble silicate and/or aluminium salt is added, and is deposited in whole or in part as oxide, hydroxide and/or oxide hydrate, in a third stage, by adding at least one water-soluble silicate, aluminium salt, cerium salt and/or zirconium salt at a pH in the range from 3 to 9, preferably from 6 to 7, the corresponding oxides, hydroxides or oxide hydrates thereof are deposited, it being necessary for these to differ from those of the second stage, and in a fourth stage at least one organic coupling agent is added and is deposited at a pH of from 3 to 9, preferably from 6 to 8.

6. Process according to Claim 5, **characterized in that** after the first stage and before the second stage is carried out the pigment is isolated, washed and dried.

7. Process according to either of Claims 5 and 6, **characterized in that** after the third stage the pigment is separated off by sedimentation, washing and filtration and is dried at from 80 to 160°C, preferably from 120 to 160°C.

8. Process according to one of Claims 5 to 7, **characterized in that** the calcined, platelet-shaped substrate coated with one or more metal oxides is a mica coated with iron(III) oxide and/or titanium dioxide.

9. Process according to one or more of Claims 5 to 7, **characterized in that** the organic coupling reagent is a silane, zirconium aluminate, ziroconate or titanate.

10. Use of the pearl lustre pigment according to one of more of Claims 1 to 4 for pigmenting paints, inks, plastics, coatings and cosmetics.

11. Paints, inks, plastics, coatings and cosmetics pigmented with a pearl lustre pigment according to one of more of Claims 1 to 4.

## Revendications

1. Pigments nacrés, comprenant :
■ une première couche interne, consistant en un substrat en paillette,
■ une deuxième couche, contenant un ou plusieurs oxydes métalliques,
■ où les première et deuxième couches forment un pigment de base calciné,
■ une troisième couche contenant l'oxyde, hydroxyde ou oxyhydrate non calciné correspondant à l'oxyde de la deuxième couche,
■ une quatrième couche, contenant un oxyde, hydroxyde et/ou oxyhydrate de silicium ou d'aluminium,
■ une cinquième couche, contenant un oxyde, hydroxyde et/ou oxyhydrate de silicium, d'aluminium, de zirconium et/ou de cérium, où cette couche est différente de la quatrième couche, et
■ une sixième couche, contenant un ou plusieurs réactifs de couplage organofonctionnels.

2. Pigment nacré selon la revendication 1, **caractérisé en ce que** le substrat est du mica.

3. Pigment nacré selon l'une quelconque des revendications 1 ou 2, **caractérisé en ce que** l'oxyde métallique de la deuxième couche est l'oxyde de fer (III) ou l'oxyde de titane.

4. Pigment nacré selon l'une quelconque des revendications 1 à 3, **caractérisé en ce que** le réactif de couplage organique est un silane, l'aluminate de zirconium, un zirconate ou un titanate.

5. Procédé de préparation d'un pigment nacré selon une quelconque des revendications 1 à 4, **caractérisé en ce que** l'on met en suspension un substrat calciné, en paillettes, revêtu d'un ou de plusieurs oxydes métalliques, dans de l'eau, on chauffe à une température de 25 à 100°C, de préférence de 40 à 80°C et on ajuste à un pH de 3 à 11, de préférence de 5 à 9, on ajoute dans une première étape, un ou plusieurs sels métalliques solubles dans l'eau, qui correspondent aux oxydes métalliques calcinés du revêtement d'oxyde métallique du substrat en paillettes, qui se déposent complètement ou partiellement sous la forme d'oxyde, d'hydroxyde et/ou d'oxyhydrate, on chauffe alors à une température de 30 à 100°C, de préférence de 40 à 75°C et on ajuste à un pH de 3 à 9, de préférence de 6 à 7, dans une deuxième étape, on ajoute un silicate et/ou sel d'aluminium soluble dans l'eau, qui se dépose complètement ou partiellement sous la forme d'oxyde, d'hydroxyde et/ou d'oxyhydrate, dans une troisième étape, à un pH situé dans l'intervalle allant de 3 à 9, de préférence de 6 à 7, par addition d'au moins un silicate, sel d'aluminium, de cérium et/ou de zirconium soluble dans l'eau, on précipite l'oxyde, hydroxyde ou oxyhydrate correspondant, où ceux-ci sont différents de ceux de la deuxième étape, et on ajoute dans une quatrième étape, au moins un agent de couplage organique et on précipite celui-ci à un pH de 3 à 9, de préférence de 6 à 8.

6. Procédé selon la revendication 5, **caractérisé en ce que** le pigment est isolé après la première étape, avant la réalisation de la deuxième étape, lavé et séché.

7. Procédé selon l'une quelconque des revendications 5 ou 6, **caractérisé en ce qu'**après la troisième étape, le pigment est séparé par sédimentation, lavage et filtration et séché à une température de 80 à 160°C, de préférence de 120 à 160°C.

8. Procédé selon l'une quelconque des revendications 5 à 7, **caractérisé en ce que** le substrat calciné, en paillettes, revêtu d'un ou de plusieurs oxydes métalliques, est un mica revêtu d'oxyde de fer (III) et/ou de dioxyde de titane.

9. Procédé selon l'une quelconque des revendications 5 ou 7, **caractérisé en ce que** l'agent de couplage organique est un silane, l'aluminate de zirconium, un zirconate ou un titanate.

10. Utilisation du pigment nacré selon l'une ou plusieurs des revendications 1 à 4 pour la pigmentation de vernis, peintures, matières plastiques, revêtements et cosmétiques.

11. Vernis, peintures, matières plastiques, revêtements et cosmétiques, qui sont pigmentés avec un pigment nacré selon l'une ou plusieurs des revendications 1 à 4.
